# EUROPÄISCHE PATENTANMELDUNG

(11) **EP 2 620 732 A1**
(43) Veröffentlichungstag der Anmeldung: **31.07.2013**
(21) Anmeldenummer: 13000128.2
(22) Anmeldetag: 10.01.2013
(51) Int. Cl.: F25J 3/04, F01K 17/04, F04D 29/58

(54) **Verfahren und Vorrichtung zur Luftzerlegung und Dampferzeugung in einem kombinierten System**

(30) Priorität: 26.01.2012 DE 102012001606; 05.04.2012 EP 12002470
(71) Anmelder: Linde Aktiengesellschaft, 80331 München (DE)
(72) Erfinder: Alekseev, Alexander, 82515 Wolfratshausen (DE); Goloubev, Dimitri, 80804 München (DE)
(74) Vertreter: Imhof, Dietmar

(57) **Zusammenfassung**

Das Verfahren und die Vorrichtung dienen zur Luftzerlegung und Dampferzeugung in einem kombinierten System, das ein Dampfsystem (10) und eine Luftzerlegungsanlage (9) aufweist, wobei ein Einsatzluftstrom (1) in ein mehrstufiges Luftverdichtungssystem (101, 102, 103) mit n Stufen (n >= 3) eingeleitet und auf einen ersten, hohen Druck, der gleich dem Enddruck des Luftverdichtungssystems ist, verdichtet und unter diesem Enddruck in die Luftzerlegungsanlage (9) eingeleitet (8) wird. Ein Zwischenkühler ist zwischen einer i-ten Stufe (102) (1 <= i < n) und einer i+1-ten Stufe (103) des Luftverdichtungssystems angeordnet; dort wird der Einsatzluftstrom (4) in indirektem Wärmeaustausch mit einem Speisewasserstrom (11) abgekühlt.

## Beschreibung

Die Erfindung betrifft ein Verfahren zur Luftzerlegung und Dampferzeugung in einem kombinierten System gemäß dem Oberbegriff des Patentanspruchs 1.

Eine Luftzerlegungsanlage kann als Tieftemperatur-Luftzerlegungsanlage, als Membran-Anlage (auf der Basis von Polymer-Membranen oder keramischen Hochtemperatur-Membranen) oder als Adsorptionsanlage ausgebildet sein. In jedem Fall muss die Einsatzluft zuerst in einem Luftverdichtungssystem verdichtet werden. Im Falle einer Tieftemperatur-Luftzerlegungsanlage umfasst die "Luftzerlegungsanlage" ein Hauptwärmetauschersystem zur Abkühlung der Einsatzluft gegen Rückströme, eine oder mehrere Turbinen, eine oder mehrere Trennsäulen und den oder die mit den Trennsäulen assoziierten Kondensatoren.

Das Wort "Dampf" bezieht sich hier immer auf Prozessdampf, also Hochdruck-Wasserdampf, der als Energiequelle benutzt wird, insbesondere in einer oder mehreren Dampfturbinen. Ein konkretes Beispiel für ein Dampfsystem ist ein Dampfkraftwerk, das mit Hilfe einer oder mehrerer Dampfturbinen elektrische Energie erzeugt. In diesem Fall kann die Luftzerlegungsanlage dem Dampfkraftwerk beispielsweise Sauerstoff für die Verbrennung eines Brennstoffs in einem Oxyfuel - oder Oxycoal-Verfahren liefern.

Eine "Stufe" eines Luftverdichtungssystems kann durch eine Maschine mit einem einzigen Verdichterrad in einem eigenen Gehäuse und mit separatem Antrieb gebildet werden. Alternativ wird eine Stufe durch ein Verdichterrad einer Kombimaschine mit gemeinsamem Antrieb für mehrere Stufen gebildet, wobei die Maschine gegebenenfalls ein gemeinsames Gehäuse für diese Stufen aufweist. Auch eine Kombination der genannten Maschinentypen ist möglich, um ein Luftverdichtungssystem zu realisieren.

Die Übertragung von Kompressionswärme des Luftverdichters einer Luftzerlegungsanlage auf Speisewasser eines Dampfsystems ist bekannt aus EP 930268 A2, US 4461154 und WO 2010052437. Hier werden jeweils vollständig adiabate Luftverdichter eingesetzt, das heißt auf jegliche Zwischenkühlung wird verzichtet. Adiabate Luftverdichter liefern zwar eine hohe Austrittstemperatur, ihre Effizienz ist jedoch vergleichsweise gering und sie verbrauchen relativ viel Energie. Das Speisewasser wird selbst als "erster Wärmeträgerstrom" eingesetzt. Das "Einkoppeln der Wärme" aus dem erwärmten ersten Wärmeträgerstrom in das Dampfsystem geschieht hier durch Einspeisung des ersten Wärmeträgerstroms als Speisewasser in das Dampfsystem.

Außerdem ist aus IPCOM000174664D ein Verdichtungssystem bekannt, bei dem zwei Kühler wärmeträgerseitig seriell verbunden sind.

Im Rahmen der Erfindung kann der erste Wärmeträgerstrom direkt als Speisewasser eingesetzt werden. Alternativ wird die Wärme aus dem erwärmten ersten Wärmeträgerstrom durch einfachen oder mehrfachen indirekten Wärmeaustausch in das Dampfsystem eingekoppelt, beispielsweise in einem Wärmetauscher, in dem der erste Wärmeträgerstrom im indirekten Gegenstrom zu einem Speisewasserstrom des Dampfsystems geleitet wird.

Der Erfindung liegt die Aufgabe zugrunde, eine günstige Nutzung der Kompressionswärme des Luftverdichters bei einem relativ niedrigen Energieverbrauch des Verdichters zu erreichen.

Diese Aufgabe wird durch die kennzeichnenden Merkmale des Patentanspruchs 1 gelöst.

Bei der Erfindung wird zwischen zwei Stufen (der i-ten und der i+1-ten) ein Zwischenkühler eingesetzt, zwischen den beiden Stufen davor (i-1 und i) jedoch keiner. (Zum Beispiel können die Stufen 1 bis i-1 vollkommen ohne Kühlung sein, etwa wenn die Stufen 1 bis i-1 durch mehrere Stufen eines Axialverdichters realisiert sind oder durch mehrere axiale Stufen eines kombinierten Axial-Radial-Verdichters). Dadurch wird an der i-ten Stufe eine Austrittstemperatur Tout(i) der Luft erreicht, die deutlich höher ist als diejenige bei einem isothermen Verdichtungssystem, bei dem zwischen jedem Paar von Stufen ein Zwischenkühler angeordnet ist. Diese erhöhte Lufttemperatur Tout(i) steht bei der Erfindung am Eintritt des Zwischenkühlers für die Erwärmung des ersten Wärmeträgerstroms zur Verfügung.

Diese Austrittstemperatur ist geringer als die eines vergleichbaren adiabaten Verdichters, damit steht auch entsprechend weniger Wärme zur Erwärmung des ersten Wärmeträgerstroms zur Verfügung. Im Rahmen der Erfindung hat sich jedoch herausgestellt, dass durch den gezielten Verzicht auf einen oder mehrere einzelne Zwischenkühler die Austrittstemperatur des Luftverdichters so hoch eingestellt werden kann, dass eine sinnvolle Nutzung der Abwärme zur Speisewasservorwärmung möglich ist, gleichzeitig die Effizienz des Luftverdichters aber nur mäßig abnimmt und insbesondere deutlich höher ist als die eines adiabaten Verdichters.

Im Vergleich zu einem üblichen zwischengekühlten (isothermen) Luftverdichter kann die Abwärme auf einem höherem Temperaturniveau auf den ersten Wärmeträgerstrom übertragen werden. Die entsprechende Wärmestrommenge und -temperatur kann optimiert werden bei gleichzeitiger Minimierung der Antriebsleistung des Verdichters.

Die mindestens zwei nacheinander geschalteten Verdichterstufen ohne Zwischenkühlung erlauben ein effizientes Anwärmen von Speisewasser (beziehungsweise von Wasser aus einem zwischengeschalteten Kreislauf zum Anwärmen des Speisewassers) bis zu Temperaturen von 125 bis 140°C (oder auch höher). Das Anwärmen des Wassers (oder des Wärmeträgers des zwischengeschalteten Kreislaufs) findet dabei in einem Wärmeübertrager (dem "Zwischenkühler") statt, in dem der Wasserstrom angewärmt und der in mindestens zwei Stufen verdichtete Luftstrom abgekühlt wird. Anderes als bei üblichen Zwischenbeziehungsweise Nachkühlern wird die Wärme dabei mit wesentlich geringerer mittlerer Temperaturdifferenz übertragen. Diese beträgt beispielsweise 5 bis 20 K, vorzugsweise 7 bis 12 K.

Der in dem ersten Nachkühler erwärmte erste Wärmeträgerstrom wird in das Dampfsystem eingeleitet. In dem Dampfsystem wird er entweder unmittelbar als Speisewasser in dem Dampfkessel eingesetzt, oder er dient alternativ zur indirekten Erwärmung von Speisewasser. Im letzteren Fall kann der "erste Wärmeträgerstrom" auch durch ein anderes Fluid als Wasser gebildet sein.

Besonders günstig ist die Anwendung des erfindungsgemäßen Verfahrens bei Dampfkraftwerken, wenn also das Dampfsystem durch ein Dampfkraftwerk gebildet wird.

Es sind zwei Gruppen von Dampfkraftwerksprozessen bekannt, die der Energie- und CO₂-Erzeugung aus kohlenwasserstoffhaltigen Treibstoffen (Kohle, Erdgas, Erdöl etc) gleichzeitig dienen und eine Luftzerlegungsanlage beinhalten, IGCC-Prozesse und Oxyfuel-Verfahren. Diese Verfahren können sowohl primär für die Energieerzeugung mit CO₂-Abtrennung als Nebenprodukt verwendet werden, als auch primär der Erzeugung von CO₂- oder CO₂-haltigen Fluiden mit elektrischer Energie als Nebenprodukt dienen.

Bei einem Oxyfuel-Verfahren wird der Treibstoff nicht mit der Luft sondern mit Sauerstoff oder einem sauerstoffreicheren Gas verbrannt, das von einer Luftzerlegungsanlage geliefert wird.

Bei einem IGCC-Verfahren wird flüssiger oder fester Treibstoff zuerst in einem Vergaser in Synthesegas umgewandelt, welches hauptsächlich aus CO und H₂ besteht. Dieses Gas wird danach unter Einsatz von Wasserdampf weiter chemisch umgewandelt, aus CO und H₂O entstehen dann H₂ und CO₂ (Shift-Reaktion), das CO₂ wird abgetrennt. Brennbare Gase aus der Vergasung und Shift-Reaktion werden zur Energieerzeugung in einem kombinierten Gas- und Dampfkraftwerksprozess eingesetzt. Dabei werden sie in einer Gasturbine verbrannt, Abgas aus der Gasturbine wird über einen Abhitzekessel geleitet, in dem die Rauchgaswärme an den Dampfkreislauf übertragen wird. Zum Betrieb des Vergasers werden Sauerstoff und Stickstoff gebraucht; Stickstoff kann außerdem zum Verdünnen von brennbaren wasserstoffhaltigen Stoffen vor dem Eintritt in die Gasturbine eingesetzt werden. Diese Gase werden in einer Luftzerlegungsanlage erzeugt.

Die Energieeffizienz von IGCC- oder Oxyfuel-Verfahren kann durch die erfindungsgemäße Integration von Luftverdichterabwärme in den Dampfkreislauf verbessert werden. Die nach der Verdichtung (in einer oder mehreren Stufen des Luftverdichters) heiße Luft (oder ein Teil der Luft) wird dabei durch einen Gegenstrom - oder Kreuzgegenstrom-Wärmetauscher geleitet, um die Wärme an ein Fluid (den "ersten Wärmeträgerstrom") zu übertragen, das ebenfalls durch diesen Wärmetauscher geleitet wird. Die Luft wird in diesem Wärmetauscher abgekühlt, und das Fluid angewärmt.

Als Fluid wird das Speisewasser (oder ein Teil des Speisewassers) aus dem Dampfkreislauf oder ein anderes Wärmeträgerfluid verwendet, das Wärme an den Dampfkreislauf abgibt. Die Luftverdichterabwärme wird so direkt in den Dampfkreislauf eingebunden. Diese Einbindung der Luftverdichterabwärme in den Dampfkreislauf führt dazu, dass die Energieproduktion des Dampfkreislaufs erhöht wird.

Im Rahmen der der Erfindung wird der Einsatzluftstrom stromabwärts des Zwischenkühlers und stromaufwärts der letzten Stufe des Luftverdichtungssystems in einen weiteren Kühler eingeleitet, in dem Einsatzluftstrom abgekühlt wird: Der weitere Kühler kann beispielsweise als Direktkontaktkühler ausgebildet sein, in dem die Abkühlung durch in direkten Wärmeaustausch mit Kühlwasser durchgeführt wird. Hierdurch kann einerseits die Temperatur am Austritt des Zwischenkühlers relativ hoch gehalten und damit an die Temperatur des eintretenden ersten Wärmeträgerstroms angepasst werden. Andererseits ergibt sich eine niedrige Eintrittstemperatur in die letzte Stufe, was deren Betrieb effizienter macht.

Außerdem wird ein Nachkühler eingesetzt, indem der Einsatzluftstrom - beziehungsweise im Falle der Abzweigung eines Teils vor der letzten Stufe sein erster Teil - stromabwärts der letzten Stufe des Luftverdichtungssystems in einen Nachkühler eingeleitet wird und dort in indirektem Wärmeaustausch mit einem zweiten Wärmeträgerstrom abgekühlt wird. In diesem Nachkühler kann ein weiterer Teil der Kompressionswärme des Luftverdichters zurückgewonnen werden.

Vorzugsweise bildet dabei mindestens ein Teil des in dem Nachkühler angewärmten zweiten Wärmeträgerstroms mindestens einen Teil des ersten Wärmeträgerstroms, der in den Zwischenkühler eingeleitet wird; der Nachkühler und der Zwischenkühler sind also wärmeträgerseitig seriell. Der erste Wärmeträgerstrom steht damit schon stromaufwärts des Zwischenkühlers unter erhöhter Temperatur zur Verfügung. Damit kann auch die in dem Nachkühler zurückgewonnene Kompressionswärme für die Speisewasservorwärmung genutzt und gewinnbringend in dem Dampfsystem eingesetzt werden. Durch die wasserseitige serielle Verbindung des Nachkühlers und des Zwischenkühlers wird mindestens die Abwärme, die in diesen beiden Kühlern entfernt wird, in Form vorgewärmten Speisewassers beziehungsweise des angewärmten ersten Wärmeträgerstroms dem Dampfsystem zur Verfügung gestellt.

Insbesondere wird das Luftverdichtungssystem durch einen einzigen mehrstufigen Luftverdichter mit n Stufen gebildet.

"Mehrstufiger Luftverdichter" bedeutet hier eine integrierte Maschine, in denen alle Stufen auf der gleichen Antriebswelle sitzen oder mit dem gleichen Getriebe verbunden sind.

Alternativ kann das Luftverdichtungssystem mindestens zwei Luftverdichter aufweisen, nämlich einen Hauptluftverdichter und einen Nachverdichter, wobei die letzte Stufe des Luftverdichtungssystems durch den Nachverdichter gebildet wird.

Der Zwischenkühler des Luftverdichtungssystems kann dann hinter der letzten Stufe des Hauptluftverdichters angeordnet sein; alternativ befindet sich der Zwischenkühler zwischen zwei Stufen des Hauptluftverdichters. Im Allgemeinen wird der Nachverdichter einstufig ausgebildet sein; grundsätzlich ist aber auch ein zwei- oder mehrstufiger Nachverdichter mit oder ohne Zwischenkühlung verwendbar.

Die Austrittstemperatur Tout(i), mit der die Einsatzluft aus der i-ten Stufe des Luftverdichtungssystems austritt, liegt zwischen 120 und 200°C, vorzugsweise zwischen 130 und 170°C. Damit lassen sich Temperaturen im ersten Wärmeträgerstrom von beispielsweise 125 bis 140°C erreichen.

In vielen Fällen ist es günstig wenn ein zweiter Teil des Einsatzluftstroms unter einem zweiten, mittleren Druck, der niedriger als der erste, hohe Druck ist, aus dem Luftverdichtungssystem entnommen wird, wobei der zweite Teil stromabwärts des Zwischenkühlers oder stromabwärts des Direktkontaktkühlers von dem Einsatzluftstrom abgezweigt wird. Die Mitteldruckluft ("zweiter Teil") wird also in den ersten Stufen gemeinsam mit der Hochdruckluft ("erster Teil") verdichtet, aber vor der letzten Stufe bei dem zweiten, mittleren Druck aus dem Luftverdichtungssystem entnommen. Die Mitteldruckluft kann ebenfalls in die Luftzerlegungsanlage eingeleitet oder für andere Zwecke genutzt werden.

Zum Beispiel werden bei effizienten Luftzerlegungsverfahren zur Herstellung von Niederdruck-Unrein-Sauerstoff für Dampfkraftwerke nach Oxyfuel-Verfahren in der Regel zwei Einspeise-Luftströme unter unterschiedlichen Drücken benötigt (Hochdruckluft = erster Teil und Mitteldruckluft = zweiter Teil). Die beiden Luftströme können mit nur einem Verdichter (angetrieben von einem elektrischen Motor bzw. von einer Dampfturbine) bereitgestellt werden. Dieses wird dadurch gewährleistet, dass mindestens ein Luftstrom noch vor der letzten Verdichterstufe entnommen wird, insbesondere unmittelbar nach dem Zwischenkühler beziehungsweise, falls vorhanden, unmittelbar nach dem Direktkontaktkühler.

Selbstverständlich kann analog auch ein dritter Luftteil auf einem dritten Druckniveau gewonnen werden, indem dieser gemeinsam mit dem ersten und dem zweiten Teil bis auf einen Zwischendruck des Luftverdichtungssystems verdichtet und dann aus dem Gesamtluftstrom abgezweigt wird.

Sowohl der Zwischenkühler als auch der Nachkühler können als Plattenwärmetauscher ausgeführt sein, insbesondere als solche aus Stahl, oder auch als Rohrbündelwärmetauscher mit Geradrohren, die im Kreuzgegenstrom betrieben werden. Es ist allerdings günstiger, wenn der Zwischenkühler oder der Nachkühler oder beide als schraubenförmig gewickelter Rohrbündel-Wärmetauscher ausgebildet sind.

Als "schraubenförmig gewickelter Rohrbündel-Wärmetauscher" (helically wound heat exchanger) wird hier ein Wärmetauscher bezeichnet, bei dem mindestens zwei Rohrbündel aus schraubenförmig gewickelten Rohren ineinander angeordnet sind. Derartige Wärmetauscher werden im Kreuzgegenstrom betrieben und sind beispielsweise in der Monografie "Tieftemperaturtechnik" von Hausen und Linde, 1985 auf den Seiten 471 bis 473 beschrieben. Die Rohre können innen, außen oder auf beiden Seiten berippt sein. Das anzuwärmende Fluid (Wasser) wird durch die Rohre geleitet, die auf einen Kern gewickelt sind. Die abzukühlende verdichtete Luft strömt im Außenraum zwischen den Rohren, dem Kern und dem Behältermantel.

Die Anforderungen an die Kühler für Luft sind sehr hoch. Zum einen ist die zu übertragende Wärmemenge recht groß (entspricht etwa der Verdichterleistung), zum anderen, ist man bemüht, die Temperaturdifferenz in diesem Luft-Wasser-Wärmetauscher möglichst klein (< 20K) zu halten, um die Verluste zu minimieren. Es dürfen keine großen Druckverluste auf der Luftseite entstehen, der Wärmetauscher muss mit hohen Temperaturen von bis zu 200°C und entsprechenden thermischen Spannungen zurechtkommen, und die Kosteneffizienz muss gegeben sein.

Die als Luftkühler üblicherweise eingesetzten konventionellen Rohrbündelwärmetauscher (TEMA-Wärmetauscher) sind für diese Aufgabe nicht optimal geeignet, da sie eher als Kreuzwärmetauscher funktionieren und deswegen mit deutlich größeren Temperaturdifferenzen betrieben werden. Außerdem sind sie nicht besonders kompakt. Die sehr effizienten und kompakten für den Tieftemperaturteil einer Luftzerlegungsanlage typischen Aluminium-Plate-Fin-Wärmeübertrager sind wegen hoher Betriebstemperaturen problematisch.

Die gewickelten Kreuzgegenstrom-Wärmetauscher sind robust. Sie können bei den hier erforderlichen relativ hohen Temperaturen eingesetzt werden und sind unempfindlich gegenüber den thermischen Spannungen. Außerdem sind sie kompakte und effiziente Apparate, verursachen also moderate Kosten und können mit Temperaturdifferenzen von weniger als 10 K arbeiten.

Solche schraubenförmig gewickelten Rohrbündel-Wärmetauscher können nicht nur in dem Verfahren nach Anspruch 1 und der Vorrichtung nach Anspruch 10 eingesetzt werden, sondern allgemein zur Abkühlung verdichteter Luft gegen einen anzuwärmenden Wärmeträgerstrom. Eine weitere Einsatzmöglichkeit besteht zum Beispiel in der Anwendung eines schraubenförmig gewickelten RohrbündelWärmetauschers als Nachkühler eines adiabaten Luftverdichters.

Grundsätzlich können schraubenförmig gewickelte Rohrbündel-Wärmetauscher auch in jedem anderen Verfahren als Zwischenkühler und/oder Nachkühler eines Luftverdichtungssystems eingesetzt werden.

Vorzugsweise werden der erste und der zweite Wärmeträgerstrom durch einen Wasserstrom gebildet.

Die Erfindung betrifft außerdem eine Vorrichtung gemäß Patentanspruch 10. Die erfindungsgemäße Vorrichtung kann einzeln oder in Kombination durch Vorrichtungsmerkmale ergänzt werden, die den Merkmalen der abhängigen Verfahrensansprüche entsprechen.

Die Erfindung sowie weitere Einzelheiten der Erfindung werden im Folgenden anhand eines in der Zeichnung dargestellten Ausführungsbeispiels näher erläutert.

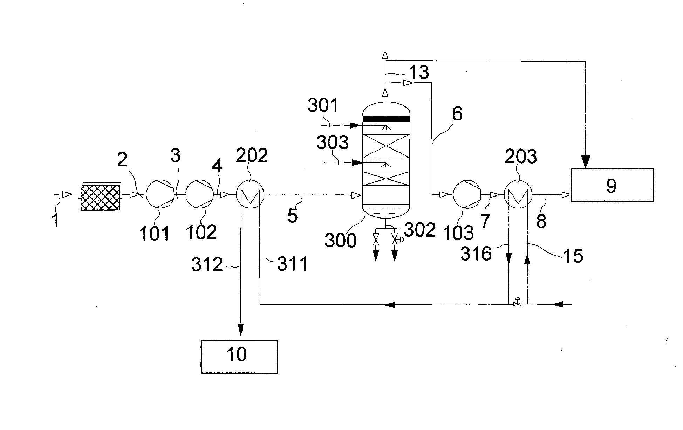

Das Ausführungsbeispiel bezieht sich auf ein dreistufiges Luftverdichtungssystem mit den Stufen 101, 102 und 103 (n = 3). Im Sinne der Patentansprüche stellt die zweite Stufe 102 die "i-te" Stufe dar, die erste Stufe 101 die "i-1-te". In beiden Ausführungsbeispielen weist der Luftverdichter einen Zwischenkühler 202 und einen Nachkühler 203 auf. Das kombinierte System weist eine Luftzerlegungsanlage 9 und ein Dampfsystem 10 auf (nur in Figur 1 dargestellt). Das Dampfsystem 10 wird durch ein Dampfkraftwerk gebildet. Die Luftzerlegungsanlage ist hier als Tieftemperatur-Luftzerlegungsanlage ausgebildet. Die Luftzerlegungsanlage 9 erzeugt einen sauerstoffangereicherten Produktstrom, der in die Brennkammer des Dampfkraftwerks 10 eingeleitet wird (in den Zeichnungen nicht dargestellt).

Atmosphärische Luft 1, 2 wird als "Einsatzluftstrom" unter 1,01 bar und 300 K von der ersten Stufe 101 über ein Filter 20 angesaugt. Der aus der ersten Stufe austretende Einsatzluftstrom 3 wird unmittelbar, das heißt ohne Abkühlung, der zweiten Stufe 102 zugeleitet und dort weiter auf einen "zweiten, mittleren Druck" von 3,0 bis 3,8 bar verdichtet. Der Einsatzluftstrom 4 stromabwärts der zweiten Stufe 102 wird im Zwischenkühler 202 abgekühlt. Mindestens ein erster Teil 6 des Einsatzluftstroms 5 stromabwärts des Zwischenkühlers 202 wird in der dritten und letzten Stufe 103 des Luftverdichtungssystems weiter auf einen Enddruck (den "ersten, hohen Druck") von 4,8 bis 5,5 bar komprimiert. Die Hochdruckluft 7 wird im Nachkühler 203 abgekühlt. Der Einsatzluftstrom (beziehungsweise der erste Teil des Einsatzluftstroms) 8 stromabwärts des Nachkühlers 203 wird in die Luftzerlegungsanlage 9 eingeleitet.

Der Zwischenkühler 202 wird mit einem ersten Wärmeträgerstrom 311 als Kühlmittel betrieben, der unter einer Temperatur von 315 bis 340 K eintritt. Dieser wird in dem ersten Zwischenkühler 202 durch indirekten Wärmeaustausch mit dem Einsatzluftstrom auf etwa 395 bis 435 K erwärmt. Der angewärmte erste Wärmeträgerstrom 312 wird in das Dampfkraftwerk 10 eingeleitet und dient dort zur Erzeugung von Prozessdampf, entweder durch unmittelbare Verwendung als Speisewasser oder durch indirekten Wärmeaustausch mit den Speisewasser, das in den Dampfkessel eingeleitet wird.

Der erste Wärmeträgerstrom tritt vorzugsweise mit einem relativ geringen Druck von weniger als 20 bar, vorzugsweise unter 10 bar in den Zwischenkühler 202 ein. Das "Hochpumpen" des Wasserstromes auf einen höheren Druck erfolgt vorzugsweise stromabwärts des Wärmetauschers (in der Zeichnung nicht dargestellt).

Der Nachkühler 203 wird von einem zweiten Wärmeträgerstrom 15 gekühlt, der eine Temperatur von 290 bis 310 K aufweist. In dem Ausführungsbeispiel werden der erste und der zweite Wärmeträgerstrom (12, 15) durch einen Wasserstrom gebildet.

Die Einsatzluft 5 stromabwärts des Zwischenkühlers 202 wird in einem weiteren Kühler, der hier als Direktkontaktkühler 300 ausgebildet ist, in direkten Wärmeaustausch mit Kühlwasser 301 gebracht und dabei um etwa 10 bis 15 K abgekühlt. Das Kühlwasser 301 wird beispielsweise durch Kaltwasser aus einem Verdunstungskühler gebildet. Aus dem Sumpf des Direktkontaktkühlers 300 wird angewärmtes Kühlwasser 302 abgezogen.

Der Nachkühler 203 und der Zwischenkühler 202 sind wasserseitig (wärmeträgerseitig) seriell geschaltet, indem der angewärmte Wasserstrom 316 aus dem Nachkühler 203 den ersten Wärmeträgerstrom 311 bildet. Die Temperatur des angewärmten zweiten Wärmeträgerstroms 316 beträgt 315 bis 340 K. Die Lufteintrittstemperatur zwischen dem Zwischenkühler 202 und dem Direktkontaktkühler 300 ist hier wegen der Vorwärmung des ersten Wärmeträgerstroms 316/311 in dem Nachkühler 203 höher als bei der Variante der Figur 2. Hier wird praktisch die Wärmeabfuhr in dem Nachkühler auf den Direktkontaktkühler "umgelegt", das heißt der Direktkontaktkühler 300 muss mehr Wärme abführen. Dafür wird hier zusätzlich zu der Kaltwassereinleitung 301 auch ein üblicher "warmer" Kühlwasserstrom 303 eingeführt.

Bei Bedarf kann ein zweiter Teil 13 des Einsatzluftstroms als Mitteldruckluft unmittelbar nach dem Zwischenkühler 202 oder - wie dargestellt - urimittelbar nach dem Direktkontaktkühler 300 aus dem Einsatzluftstrom 5 abgezweigt und getrennt der Luftzerlegungsanlage 9 zugeführt werden.

Das Ausführungsbeispiel kann in zwei Varianten realisiert werden. In der ersten Variante wird das Luftverdichtungssystem durch einen einzigen mehrstufigen Luftverdichter mit drei Stufen gebildet. In einer zweiten Variante weist das Luftverdichtungssystem einen zweistufigen Hauptluftverdichter und einen Nachverdichter auf, wobei die letzte Stufe 103 des Luftverdichtungssystems durch den Nachverdichter gebildet wird, die ersten beiden Stufen 101, 102 durch den Hauptluftverdichter.

In Abweichung von dem in der Zeichnung dargestellten Ausführungsbeispiel kann die Erfindung auch bei einem System mit einem vier- oder mehrstufigen Luftverdichtungssystem angewendet werden.

Abweichend von den unabhängigen Patentansprüchen kann der erste Wärmeträgerstrom ganz oder teilweise auch in ein anderes System als ein Dampfsystem eingeleitet werden. Grundsätzlich kann die Wärme des angewärmten ersten Wärmeträgers auch in jedem anderen System genutzt werden, das einen Wärmebedarf auf dem passenden Temperaturniveau hat. Beispielsweise kann dieser Strom zum Anwärmen von Regeneriergas für Molekularsieb-Adsorber (die etwa zur Reinigung von Einsatzluft für die oder eine Luftzerlegungsanlage dienen) oder zum Anwärmen eines Prozessstromes vor der Entspannung in einer "heißen" Turbine im Sinne der am 03.04.2012 eingereichten deutschen Patentanmeldung der Anmelderin mit dem amtlichen Aktenzeichen 102012006746.1 (internes Aktenzeichen der Anmelderin P12C036 = IC0846) und den dazu korrespondierenden Anmeldungen verwendet werden. Auch in diesem anderen System kann der erste Wärmeträgerstrom entweder direkt genutzt werden oder seine Wärme durch indirekten Wärmeaustausch in das System eingekoppelt.

## Patentansprüche

1. Integriertes Verfahren zur Luftzerlegung und Dampferzeugung in einem kombinierten System, das ein Dampfsystem (10) und eine Luftzerlegungsanlage (9) aufweist, wobei
- ein Einsatzluftstrom (1) in ein mehrstufiges Luftverdichtungssystem (101, 102, 103) mit n Stufen (n >= 3) eingeleitet und mindestens zu einem ersten Teil auf einen ersten, hohen Druck, der gleich dem Enddruck des Luftverdichtungssystems ist, verdichtet und unter diesem Enddruck in die Luftzerlegungsanlage (9) eingeleitet (8) wird,
- der Einsatzluftstrom (4) unter einer Austrittstemperatur Tout(i) aus einer Stufe (102) des Luftverdichtungssystems entnommen und unter dieser Temperatur in einen Zwischenkühler (202) eingeleitet wird, der zwischen einer i-ten Stufe (102) (1 <= i < n) und der folgenden i+1-ten Stufe (103) des Luftverdichtungssystems angeordnet ist,
- der Einsatzluftstrom (4) in dem Zwischenkühler (202) in indirektem Wärmeaustausch mit einem ersten Wärmeträgerstrom (11; 311) abgekühlt wird,
- Wärme aus dem in dem Zwischenkühler (202) erwärmten ersten Wärmeträgerstrom (12; 312) in das Dampfsystem (10) eingekoppelt wird und
- der Einsatzluftstrom (3) aus der vorangehenden i-1-ten Stufe (101) des Luftverdichtungssystems entnommen und ohne Zwischenkühlung in die i-te Stufe (102) des Luftverdichtungssystems eingeleitet wird,
**dadurch gekennzeichnet, dass**
- der Einsatzluftstrom stromabwärts des Zwischenkühlers und stromaufwärts der letzten Stufe des Luftverdichtungssystems in einen weiteren Kühler (300) eingeleitet wird,
- mindestens ein erster Teil des Einsatzluftstroms (7) stromabwärts der letzten Stufe (103) des Luftverdichtungssystems in einen Nachkühler (203) eingeleitet wird und dort in indirektem Wärmeaustausch mit einem zweiten Wärmeträgerstrom (15) abgekühlt wird und
- mindestens ein Teil des in dem Nachkühler (203) angewärmten zweiten Wärmeträgers (316) mindestens einen Teil des ersten Wärmeträgerstroms (311) bildet, der in den Zwischenkühler (202) eingeleitet wird.

2. Verfahren nach Anspruch 1, **dadurch gekennzeichnet, dass** der weitere Kühler (300) als Direktkontaktkühler ausgebildet ist und der Einsatzluftstrom in dem Direktkontaktkühler (300) in direktem Wärmeaustausch mit Kühlwasser (301. 302) abgekühlt wird.

3. Verfahren nach Anspruch 1 oder 2, **dadurch gekennzeichnet, dass** das Luftverdichtungssystem durch einen einzigen mehrstufigen Luftverdichter mit n Stufen gebildet wird.

4. Verfahren nach Anspruch 1 oder 2, **dadurch gekennzeichnet, dass** das Luftverdichtungssystem mindestens zwei Luftverdichter aufweist, nämlich einen Hauptluftverdichter und einen Nachverdichter, wobei die letzte Stufe des Luftverdichtungssystems durch den Nachverdichter gebildet wird.

5. Verfahren nach einem der Ansprüche 1 bis 4, **dadurch gekennzeichnet, dass** die Austrittstemperatur Tout(i) des Einsatzluftstroms (4) aus der i-ten Stufe (102) des Luftverdichtungssystems zwischen 120 und 200°C, insbesondere zwischen 130 und 170°C liegt.

6. Verfahren nach einem der Ansprüche 1 bis 5, **dadurch gekennzeichnet, dass** ein zweiter Teil (13) des Einsatzluftstroms unter einem zweiten, mittleren Druck, der niedriger als der erste, hohe Druck ist, aus dem Luftverdichtungssystem entnommen wird, wobei der zweite Teil stromabwärts des Zwischenkühlers (202) oder stromabwärts des weiteren Kühlers (300) von dem Einsatzluftstrom abgezweigt wird.

7. Verfahren nach einem der Ansprüche 1 bis 8, **dadurch gekennzeichnet, dass** der Zwischenkühler (202) und/oder der Nachkühler (203) als schraubenförmig gewickelter Rohrbündel-Wärmetauscher ausgebildet ist.

8. Verfahren nach einem der Ansprüche 1 bis 7, **dadurch gekennzeichnet, dass** der zweite Wärmeträgerstrom (15) durch einen Wasserstrom gebildet wird.

9. Verfahren nach einem der Ansprüche 1 bis 8, **dadurch gekennzeichnet, dass** der erste Wärmeträgerstrom (15) durch einen Wasserstrom gebildet wird.

10. Integrierte Vorrichtung zur Luftzerlegung und Dampferzeugung mit einem kombinierten System, das ein Dampfsystem (10) und eine Luftzerlegungsanlage (9) aufweist, und
- mit einem mehrstufigen Luftverdichtungssystem (101, 102, 103) mit n Stufen (n >= 3) zum Verdichten eines Einsatzluftstroms (1) auf einen ersten, hohen Druck, der gleich dem Enddruck des Luftverdichtungssystems ist,
- mit Mitteln zum Einleiten (8) des verdichteten Einsatzluftstroms unter diesem Enddruck in die Luftzerlegungsanlage (9),
- mit Mitteln zum Entnehmen des Einsatzluftstroms (4) unter einer Austrittstemperatur Tout(i) aus einer Stufe (102) des Luftverdichtungssystems und zum Einleiten unter dieser Temperatur in einen Zwischenkühler (202), der zwischen einer i-ten Stufe (102) (1 <= i < n) und der folgenden i+1-ten Stufe (103) des Luftverdichtungssystems angeordnet ist,
- wobei der Zwischenkühler (202) zum Abkühlen des Einsatzluftstroms (4) in indirektem Wärmeaustausch mit einem ersten Wärmeträgerstrom (11; 311) ausgebildet ist, und
- mit Mitteln zum Einkoppeln von Wärme aus dem in dem Zwischenkühler (202) erwärmten ersten Wärmeträgerstrom (12; 312) in das Dampfsystem (10),
- wobei die Vorrichtung Mittel zum Entnehmen des Einsatzluftstroms (3) aus der vorangehenden i-1-ten Stufe (101) des Luftverdichtungssystems zur Einleitung ohne Zwischenkühlung in die i-te Stufe (102) des Luftverdichtungssystems aufweist
**gekennzeichnet durch**
- Mittel zum Einleiten des Einsatzluftstroms stromabwärts des Zwischenkühlers und stromaufwärts der letzten Stufe des Luftverdichtungssystems in einen weiteren Kühler (300),
- Mittel zur Einleitung mindestens eines ersten Teils des Einsatzluftstroms (7) stromabwärts der letzten Stufe (103) des Luftverdichtungssystems in einen Nachkühler (203), der zum Abkühlen **durch** indirektem Wärmeaustausch mit einem zweiten Wärmeträgerstrom (15) ausgebildet ist und
- Mittel zur Einleitung mindestens eines Teils des in dem Nachkühler (203) angewärmten zweiten Wärmeträgerstroms (316) als ersten Wärmeträgerstroms (311) in den Zwischenkühler (202).
